# EUROPEAN PATENT APPLICATION

(11) **EP 4 741 702 A1**
(43) Date of publication of application: **13.05.2026**
(21) Application number: 24868081.1
(22) Date of filing: 30.08.2024
(51) Int. Cl.: F17C 1/06, F16J 12/00, F17C 1/00

(54) **PRESSURE VESSEL AND METHOD FOR MANUFACTURING PRESSURE VESSEL**

(30) Priority: 21.09.2023 JP 2023156265
(71) Applicant: Yachiyo Industry Co., Ltd., Sayama-shi, Saitama 350-1335 (JP)
(72) Inventor: YOSHIOKA Junya, Sayama-shi, Saitama 350-1328 (JP); IWASE Wataru, Sayama-shi, Saitama 350-1328 (JP); FUKUDA Keiko, Sayama-shi, Saitama 350-1328 (JP); MASUDA Naoki, Sayama-shi, Saitama 350-1328 (JP); KAMIYA Ken, Sayama-shi, Saitama 350-1328 (JP)
(74) Representative: Weickmann & Weickmann PartmbB
(86) International application number: PCT/JP2024/031135
(87) International publication number: WO 2025/063001

(57) **Abstract**

A pressure vessel according to the present invention comprises a hollow liner (2) having a pair of protruding portions (23A), (23B) that protrude in directions moving away from one other, a pair of mouthpieces (4A), (4B) that are connected to the pair of protruding portions (23A), (23B) by means of a fastening structure that involves rotation, and a fiber-reinforced resin layer (3) obtained by winding fibers around the outer peripheral surfaces of the liner (2) and the mouthpieces (4A), (4B). The pressure vessel is characterized in that the fastening directions in the connections between the pair of protruding portions (23A), (23B) and the mouthpieces (4A), (4B) are set to the directions in which the respective mouthpieces (4A), (4B) are fastened to the pair of protruding portions (23A), (23B) when the fibers are wound around the outer surface of the liner (2).

## Description

### TECHNICAL FIELD

The present invention relates to a pressure vessel and a method for manufacturing a pressure vessel.

### BACKGROUND ART

A pressure vessel is known which includes a liner having a shell for holding a gas or liquid and a pair of projections projecting outward from the shell, metal neck fitting members provided on the outer circumferences of the projections, and a fiber-reinforced resin layer covering the liner and the neck fitting members (Patent Literature 1). For example, in forming the fiber-reinforced resin layer by filament winding, while a drive shaft fitted to the neck fittings is being rotationally driven to rotate the neck fittings and the liner together, a fiber-reinforced resin is wound around the outer circumference of the liner.

### CITATION LIST

### Patent Literature

Patent Literature 1: JP2009-58111A
Patent Literature 2: JP2017-122464A

### SUMMARY OF INVENTION

### Technical Problem

In the background art, some pressure vessels employ a threaded engagement mechanism to connect a pair of projections and neck fittings, as described in Patent Literature 1. All of threads provided in such a threaded engagement mechanism are right-handed threads (or left-handed threads). Therefore, for example, when unidirectional tension acts on the fiber during filament winding, the tension acts on one of the pair of projections in a neck-fitting fastening direction, while the tension acts on the other projection in a neck-fitting loosening direction. This poses a problem in that the neck fitting on the other side rotates in the loosening direction relative to the liner during filament winding, making it difficult to securely fasten the neck fitting. As described in Patent Literature 2, a method for preventing a neck fitting from rotating relative to a liner is provided by forming a rotation restriction portion, such as a recess or a boss, on the neck fitting. However, this method has a drawback in that the neck fitting structure becomes complicated, which tends to cause forming defects and also increases production costs.

The present invention is intended to provide a pressure vessel and a method for manufacturing a pressure vessel that prevent a neck fitting from rotating relative to a liner during manufacturing.

### Solution to Problem

In order to solve the aforementioned problem, the present invention includes a hollow liner having a pair of projections projecting in directions away from each other, a pair of neck fittings connected to the pair of projections via a rotational fastening mechanism, and a fiber-reinforced resin layer formed by winding a fiber around outer circumferential surfaces of the liner and the neck fittings. Fastening directions in the connection between the pair of projections and the neck fittings are set to directions in which the neck fittings are respectively fastened to the pair of projections in an operation of winding the fiber around an outer surface of the liner.

Further, the present invention provides a method for manufacturing a pressure vessel including a hollow liner having a pair of projections projecting in directions away from each other, and a pair of neck fittings connected to the pair of projections via a rotational fastening mechanism, the method including: a fastening step of fastening each of the neck fittings to the corresponding one of the pair of projections; and a fiber-reinforced resin layer forming step of rotationally driving the liner and winding a fiber around an outer circumferential surface of the liner to form a fiber-reinforced resin layer. The pair of neck fittings and the pair of projections are formed such that the pair of neck fittings are respectively fastened to the pair of projections in an operation of winding the fiber around an outer surface of the liner by synchronously rotating a drive shaft and the neck fittings with the drive shaft fitted into the pair of neck fittings in the fiber-reinforced resin layer forming step.

According to the present invention, it is possible to prevent the neck fittings from rotating relative to the liner during manufacturing without providing a special shape to the liner or the neck fittings.

Further, it is preferable that the fastening mechanism between the pair of projections and the neck fittings includes a threaded engagement mechanism and be formed such that a fastening direction in the threaded connection between the projection and the neck fitting on one side is opposite to a fastening direction in the threaded connection between the projection and the neck fitting on the other side.

According to the present invention, with a simple structure, it is possible to prevent the neck fittings from rotating relative to the liner during manufacturing.

### Advantageous Effects of Invention

According to a pressure vessel and a method for manufacturing a pressure vessel of the present invention, it is possible to prevent a neck fitting from rotating relative to a liner during manufacturing.

### BRIEF DESCRIPTION OF DRAWINGS

[FIG. 1]

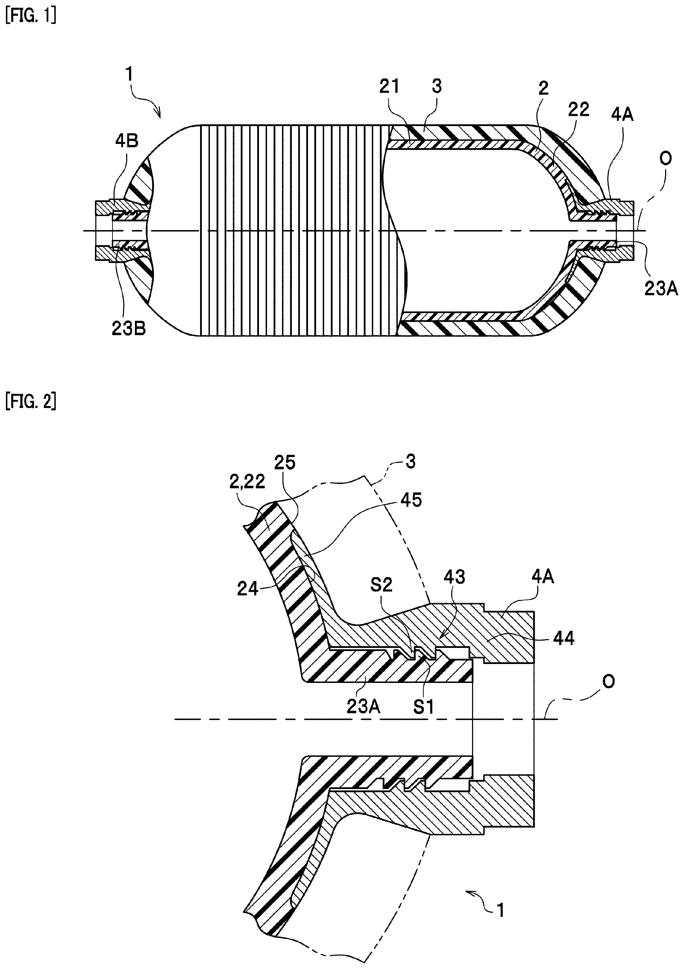

   FIG. 1 is a side cross-sectional view showing a pressure vessel according to an embodiment of the present invention.
[FIG. 2]
   FIG. 2 is an enlarged side cross-sectional view showing a connecting mechanism between a liner and a neck fitting on one side.
[FIG. 3]

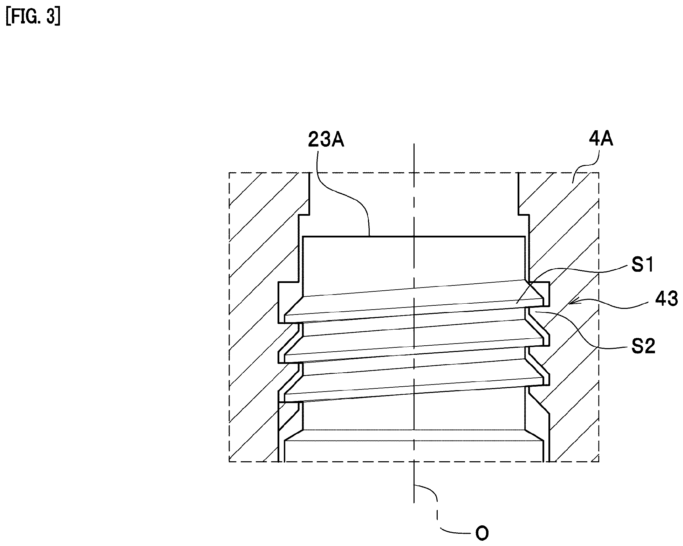

   FIG. 3 is a side view showing a direction of threading in a fastening mechanism in FIG. 2.
[FIG. 4]

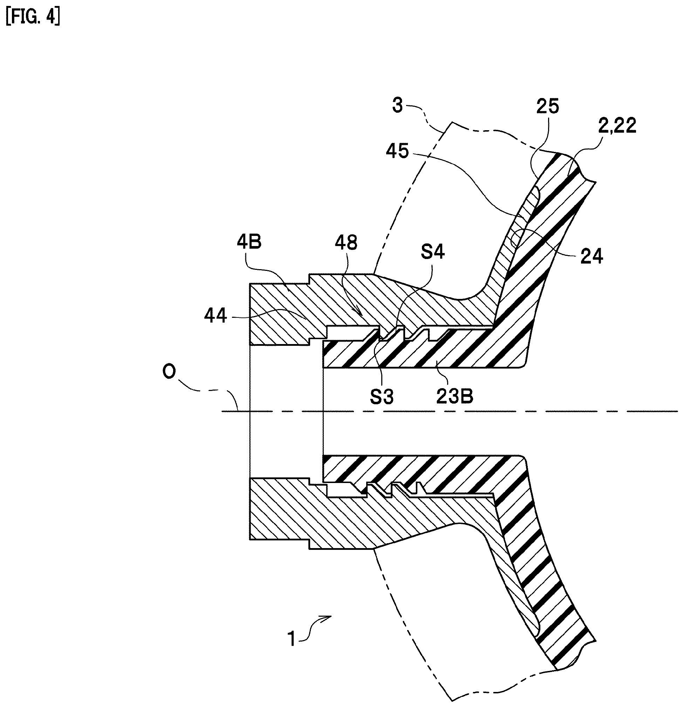

   FIG. 4 is an enlarged side cross-sectional view showing a connecting mechanism between the liner and a neck fitting on the other side.
[FIG. 5]

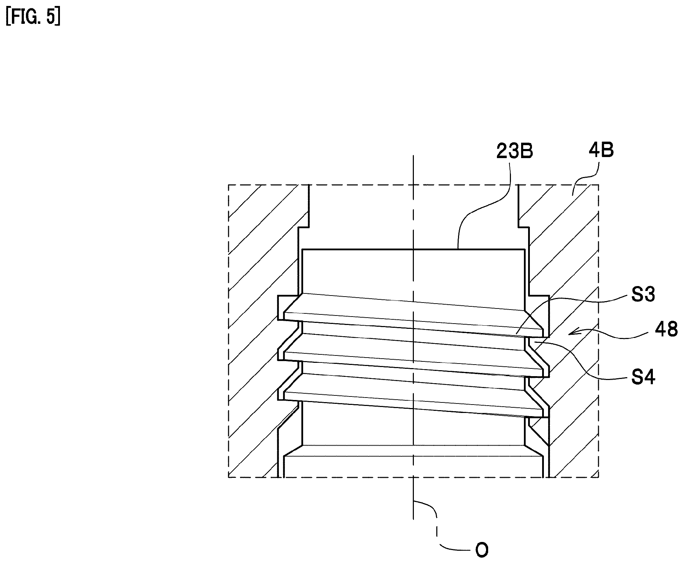

   FIG. 5 is a side view showing a direction of threading of a fastening mechanism in FIG. 4.
[FIG. 6]

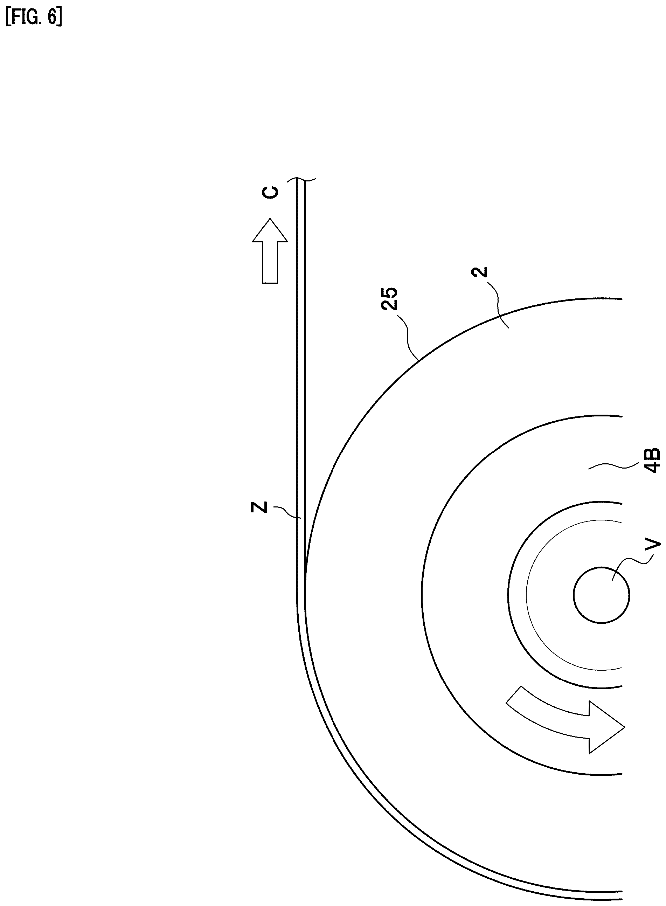

   FIG. 6 is a diagram showing a state of a process of winding a fiber around an outer circumference of the liner.
[FIG. 7]

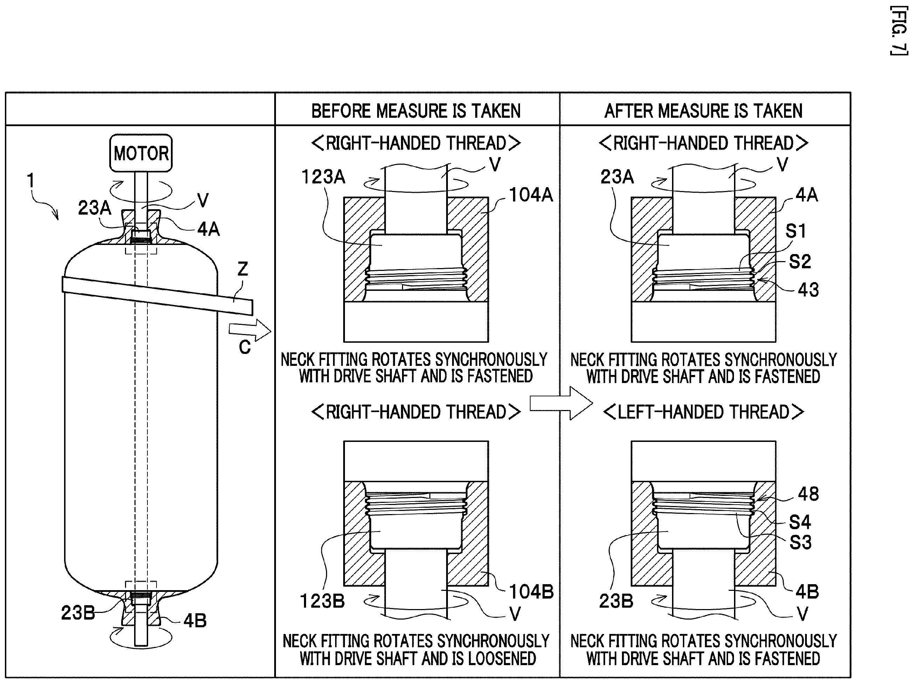

   FIG. 7 is a comparison table showing advantageous effects of the pressure vessel according to the present embodiment.

### DESCRIPTION OF EMBODIMENTS

### <<Pressure Vessel according to Embodiment>>

Hereinafter, an embodiment of the present invention will be described with reference to the accompanying drawings. In the description of the drawings, the same elements are given the same reference signs, and duplicated descriptions will be omitted as appropriate.

As shown in FIG. 1, a pressure vessel 1 according to the present embodiment is used as a vessel for holding low-pressure gas such as LPG, high-pressure gas such as hydrogen gas, or any other fluid. As shown in FIG. 1, the pressure vessel 1 of the present invention includes a liner 2, a fiber-reinforced resin layer 3, and neck fittings 4A and 4B.

The liner 2 includes a cylindrical shell 21, domed heads 22 and 22 formed on both ends of the shell 21, and projections 23A and 23B projecting from the domed heads 22 and 22 in directions away from each other. The liner 2 is formed by injection molding, blow molding, or the like using a resin material such as high-density polyethylene (HDPE), polyamide, polyketone, or polyphenylene sulfide (PPS).

The domed heads 22 and 22 are portions formed continuously with both ends of the shell 21, and reduced in diameter toward their tip ends. The projections 23A and 23B, each projecting outward and having a substantially cylindrical shape, are formed in the domed heads 22 and 22. The projections 23A and 23B are portions to which the neck fittings 4A and 4B are connected, respectively. A connecting mechanism between the projections 23A and 23B and the neck fittings 4A and 4B will be described in detail later.

The fiber-reinforced resin layer 3 is made of, for example, a fiber reinforced resin (FRP: fiber-reinforced plastic) and serves to reinforce the pressure resistance strength of the liner 2. The fiber-reinforced resin layer 3 is formed on the outer surfaces of the liner 2 and the neck fittings 4A and 4B by using, for example, a filament winding method in which a fiber bundle impregnated with resin is wound and then the resin is cured.

The neck fittings 4A and 4B are members externally fitted over the projections 23A and 23B of the liner 2 and function as gas inlet and outlet. The neck fittings 4A and 4B are formed using a high-strength metal material such as an aluminum alloy or stainless steel alloy and are attached to the projections 23A and 23B with valves or the like inserted in the neck fittings 4A and 4B. In a fiber-reinforced resin layer forming step to be described later, a drive shaft V (see FIG. 6) is inserted into the neck fittings 4A and 4B, and a fiber is wound around the liner 2 while the liner 2 is driven rotationally around the drive shaft V, thereby forming the fiber-reinforced resin layer 3.

As shown in FIG. 2, the neck fitting 4A includes a tubular portion 44 and a flange portion 45. The tubular portion 44 is cylindrical and rises from the flange portion 45. The flange portion 45 is a portion extending in a plate-like shape along a circumferential direction. The flange portion 45 is disposed in a recess 24 formed in the domed head 22. An outer surface of the flange portion 45 and an outer surface of the domed head 22 are flush with each other. As shown in FIG. 4, the neck fitting 4B includes a tubular portion 44 and a flange portion 45. The neck fitting 4B is identical to the neck fitting 4A except for a female thread formed on its inner circumferential surface.

### (Fastening Mechanism)

Next, a fastening mechanism between the liner 2 and the neck fittings 4A and 4B will be described. First, the neck fitting 4A will be described.

As shown in FIG. 3, a male thread (right-handed thread) S1 is formed on the outer circumferential surface of the projection 23A. Specifically, a thread ridge is wound in a right-hand (clockwise) direction from the tip end (the upper side in FIG. 3) to the base end (the lower side in FIG. 3) of the projection 23A. Meanwhile, a female thread (right-handed thread) S2 is formed on the inner circumferential surface of the neck fitting 4A. Specifically, a thread groove is wound in the right-hand (clockwise) direction from the tip end (the upper side in FIG. 3) to the base end (the lower side in FIG. 3) of the neck fitting 4A. The projection 23A and the neck fitting 4A are threadedly engaged to form a fastening mechanism 43. Note that, although the fastening mechanism 43 employs a threaded connection in the present embodiment, any rotational mechanism may be used, such as a cam lock mechanism.

As shown in FIG. 5 , a male thread (left-handed thread) S3 is formed on the outer circumferential surface of the projection 23B. Specifically, a thread ridge is wound in a left-hand (counterclockwise) direction from the tip end (the upper side in FIG. 5) to the base end (the lower side in FIG. 5) of the projection 23B. Meanwhile, a female thread (left-handed thread) S4 is formed on the inner circumferential surface of the neck fitting 4B. Specifically, a thread groove is wound in the left-hand (counterclockwise) direction from the tip end (the upper side in FIG. 5) to the base end (the lower side in FIG. 5) of the neck fitting 4B. The projection 23B and the neck fitting 4B are threadedly engaged to form a fastening mechanism 48. Note that, although the fastening mechanism 48 employs a threaded connection in the present embodiment, any rotational mechanism may be used, such as a cam lock mechanism.

### <<Method for Manufacturing Pressure Vessel according to Embodiment>>

Subsequently, a method for manufacturing the pressure vessel 1 will be described. The method for manufacturing a pressure vessel according to the present embodiment involves a preparation step, a fastening step, and a fiber-reinforced resin layer forming step.

In the preparation step, the liner 2 having the projections 23A and 23B and the neck fittings 4A and 4B are formed. The liner 2 is molded using a mold, for example, by blow molding. As described above, the male thread (right-handed thread) S1 is formed on the outer circumferential surface of the projection 23A and the male thread (left-handed thread) S3 is formed on the outer circumferential surface of the projection 23B. As described above, the female thread (right-handed thread) S2 is formed on the inner circumferential surface of the neck fitting 4A, and the female thread (left-handed thread) S4 is formed on the inner circumferential surface of the neck fitting 4B.

In the fastening step, the neck fitting 4A is fastened to the projection 23A via threaded engagement, and the neck fitting 4B is fastened to the projection 23B via threaded engagement.

In the fiber-reinforced resin layer forming step, the fiber-reinforced resin layer 3 is formed using a filament winding method in which a resin-impregnated fiber Z is wound around the outer circumferences of the liner 2 and the neck fittings 4A and 4B, as shown in FIG. 6. In the present embodiment, as shown in FIG. 7, a drive shaft V extending from a motor (rotary drive unit) is inserted (fitted) into the inner surfaces of the neck fittings 4A and 4B, and the drive shaft V is rotated clockwise as viewed from the motor, so that the drive shaft V and the neck fittings 4A and 4B are rotated synchronously and the liner 2 is also rotated accordingly. The fiber Z is wound around the outer surface of the liner 2 while the liner 2 is being rotated clockwise around the drive shaft V.

The method for manufacturing a liner for a pressure vessel is not limited to the above-described method. Although the blow molding is described as an example, the liner 2 may be molded in any other molding method such as rotational molding and injection molding.

### (Advantageous Effects)

Here, FIG. 7 is a comparison table showing advantageous effects of the pressure vessel according to the present embodiment. Before the measure disclosed herein is taken, as shown in FIG. 7, a neck fitting 104A is fastened to a projection 123A via right-hand threaded engagement on one side, and a neck fitting 104B is fastened to a projection 123B via right-hand threaded engagement on the other side. Therefore, when the drive shaft V is rotated, tension from a fiber to be wound (see arrow C in FIG. 7) is applied to the liner 2 and restricts the rotation of the liner 2 relative to the rotations of the drive shaft V and the neck fittings 104A and 104B, therefore causing the neck fitting 104A on the upper side in FIG. 7 to act in the fastening direction, while causing the neck fitting 104B on the lower side in FIG. 7 to act in the loosing direction. In other words, the problem arises in that the neck fitting 104B on the lower side in FIG. 7 is loosened during the filament winding, making it difficult to securely fasten the neck fitting 104B.

In contrast, according to the present embodiment, the neck fitting 4A is fastened to the projection 23A via right-hand threaded engagement on one side and the neck fitting 4B is fastened to the projection 23B via left-hand threaded engagement on the other side. As a result, when the drive shaft V is rotated, tension from a fiber to be wound (arrow C in FIGS. 6 and 7) is applied to the liner 2 and restricts the rotation of the liner 2 relative to the rotations of the drive shaft V and the neck fittings 4A and 4B, therefore causing both the neck fittings 4A and 4B to act in the fastening directions. Thus, the liner 2 and the neck fittings 4A and 4B can be securely assembled with the fiber-reinforced resin layer 3.

According to the pressure vessel 1 of the present embodiment described above, both of the fastening directions of the neck fittings 4A and 4B and the projections 23A and 23B are set to the directions in which they are fastened during filament winding. This makes it possible to prevent the neck fittings 4A and 4B from rotating relative to the liner 2 during filament winding without providing any special shape to the liner 2 or the neck fittings 4A and 4B.

The fastening mechanism 43 is a threaded engagement mechanism in which the male thread S1 of the projection 23A is threadedly engaged with the female thread S2 of the neck fitting 4A. The fastening mechanism 48 is a threaded engagement mechanism in which the male thread S3 of the projection 23B is threadedly engaged with the female thread S4 of the neck fitting 4B. This allows the fastening mechanisms to be easily structured.

Although the embodiment of the present invention has been described above, various design modifications may be made as necessary without departing from the scope of the present invention. For example, in the present embodiment, the neck fitting 4A is provided with a right-handed thread and the neck fitting 4B is provided with a left-handed thread. However, when the rotation direction of the liner 2 is reversed and becomes counterclockwise as viewed from the motor side, the neck fitting 4A may instead be provided with a left-handed thread and the neck fitting 4B with a right-handed thread.

### Reference Signs List

- 1: pressure vessel
- 2: liner
- 3: fiber-reinforced resin layer
- 4A, 4B: neck fitting
- 21: shell
- 23A, 23B: projection

## Claims

1. A pressure vessel comprising:
a hollow liner having a pair of projections projecting in directions away from each other;
a pair of neck fittings connected to the pair of projections via a rotational fastening mechanism; and
a fiber-reinforced resin layer formed by winding a fiber around outer circumferential surfaces of the liner and the neck fittings, wherein
fastening directions in the connection between the pair of projections and the neck fittings are set to directions in which the neck fittings are respectively fastened to the pair of projections in an operation of winding the fiber around an outer surface of the liner.

2. The pressure vessel according to claim 1, wherein
the fastening mechanism between the pair of projections and the neck fittings comprises a threaded engagement mechanism, and
the fastening mechanism is formed such that the fastening direction in the threaded connection between the projection and the neck fitting on one side is opposite to the fastening direction in the threaded connection between the projection and the neck fitting on the other side.

3. A method for manufacturing a pressure vessel including a hollow liner having a pair of projections projecting in directions away from each other, and a pair of neck fittings connected to the pair of projections via a rotational fastening mechanism, the method comprising:
a fastening step of fastening each of the neck fittings to the corresponding one of the pair of projections; and
a fiber-reinforced resin layer forming step of rotationally driving the liner and winding a fiber around an outer circumferential surface of the liner to form a fiber-reinforced resin layer, wherein
the pair of neck fittings and the pair of projections are formed such that the pair of neck fittings are respectively fastened to the pair of projections in an operation of winding the fiber around an outer surface of the liner by synchronously rotating a drive shaft and the neck fittings with the drive shaft fitted in the pair of neck fittings in the fiber-reinforced resin layer forming step.
